# EUROPEAN PATENT SPECIFICATION

(11) **EP 2 237 686 B1**
(45) Date of publication and mention of the grant of the patent: **07.09.2011**
(21) Application number: 08831137.8
(22) Date of filing: 26.11.2008
(51) Int. Cl.: A23N 15/02

(54) **AN INERTISED DESTEMMING MACHINE**
INERTISIERTE ENTRAPPUNGSMASCHINE
MACHINE D'ÉLIMINATION DE TIGES À INERTIE

(30) Priority: 09.01.2008 IT RE20080001
(43) Date of publication of application: 13.10.2010
(73) Proprietor: DIEMME S.P.A., 48022 Lugo (IT)
(72) Inventor: MELANDRI, Filippo, 40137 Bologna (IT); MELANDRI, Giuseppe, 48022 Lugo (Ravenna) (IT)
(74) Representative: Corradini, Corrado
(86) International application number: PCT/EP2008/066259
(87) International publication number: WO 2009/034195

(56) References cited:
- WO-A-2005/041696
- DE-U1- 20 002 935
- US-A- 3 478 796
- US-A- 3 714 887
- US-A- 3 900 571

## Description

### Technical Field

The invention relates to a destemming machine.

As is known, destemming machines have the function of separating the grapes from the woody part of the bunches, i.e. from the stems.

### Background Art

Destemming machines are generally constituted by a rotary perforated drum internally of which a shaft bearing helically-arranged blades rotates, the shaft and blades functioning as beaters for separating the stalks and stems from the grapes, the whole complex of elements being mounted on a metal frame, and the rotating drum and shaft being generally activated by a gear reducer group or other similar means for rotating.

The bunches of grapes are introduced into the machine from a hopper and are beaten by the beater shaft against the walls of the perforated drum, the perforations being sufficiently large to easily enable passage of the grapes while the stems and stalks are retained internally of the drum and are then transported by the action of the beater shaft/blades towards an outlet mouth therefor, which mouth is generally located in an opposite position to the entry mouth.

The stalks and stems are temporarily accumulated at the outlet of the destemmer, while the wine must, i.e. the mass constituted by the juice, pulp, skins and seeds of the grapes, is transported elsewhere, to the next process stage.

Destemming machines of the prior art however operate in normal environments and this means that the grapes subjected to the destemming operation, should the grapes tear or break, are subject to generally undesirable oxidation processes, with a detrimental effect on the quality of the wine.

An aim of the present invention is to resolve the above-cited drawbacks in a convenient and relatively inexpensive way.

A further aim of the invention is to guarantee the quality of the processed product also during the destemming stage.

### Disclosure of Invention

These aims are attained by a destemming machine comprising a frame which houses a machine body to which a hopper is associated to enable input of the material to be destemmed into an inlet mouth of the machine body, at least a rotary perforated drum contained internally of the above-cited machine body, internally of which a shaft equipped with helically-arranged blades rotates in order to perform the destemming operation, the machine comprising at least an outlet mouth for the destemmed grapes and an outlet mouth for the stalks and stems, characterised in that the destemming machine includes means for injection and circulation of inertising gas internally thereof, as defined in claim 1.

In a preferred embodiment of the invention, a valve is associated to the inlet mouth, which valve has the function of isolating the internal volume of the machine from the surrounding environment such as to keep to a minimum both the leakage of inertising gas towards the external environment and the inlet of air internally of the machine during the loading of the product. The valve is preferably a rotary valve comprising a cylindrical body provided with an inlet opening and an outlet opening for the product and internally of which an obturator organ is housed, rotating about the axis of the cylindrical body. The obturator organ preferably has, in section, a star-shape; this shape advantageously also enables batching the product introduced in the machine. The valve associated to the inlet mouth of the machine can alternatively be connected directly to the mouth, or it can be mounted on the hopper associated to the mouth itself. A preferred embodiment of the invention also includes the presence of a second valve, identical to the first valve, associated to the discharge of the stems such as to reduce leakage of inertising gas during the discharge stage of the stems.

Further characteristics of the invention can be deduced from the dependent claims included herewith.

### Brief description of the Drawings

Further characteristics and advantages of the invention will become evident from a reading of the following description, provided by way of non-limiting example with the aid of the appended figures of the drawings, in which:

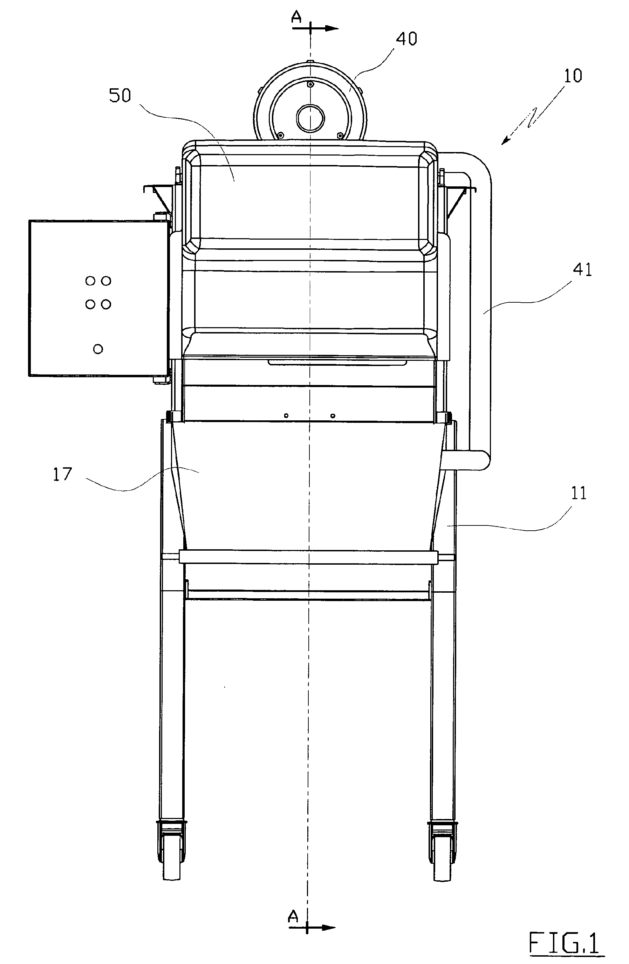

figure 1 is a front view of the destemming machine of the present invention;

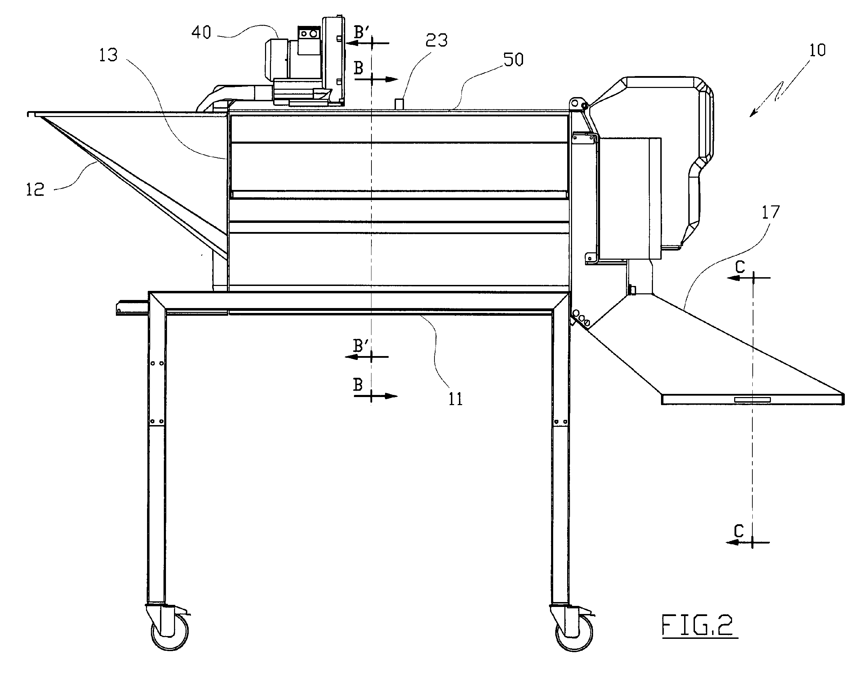

figure 2 is a lateral view of the destemming machine of figure 1;

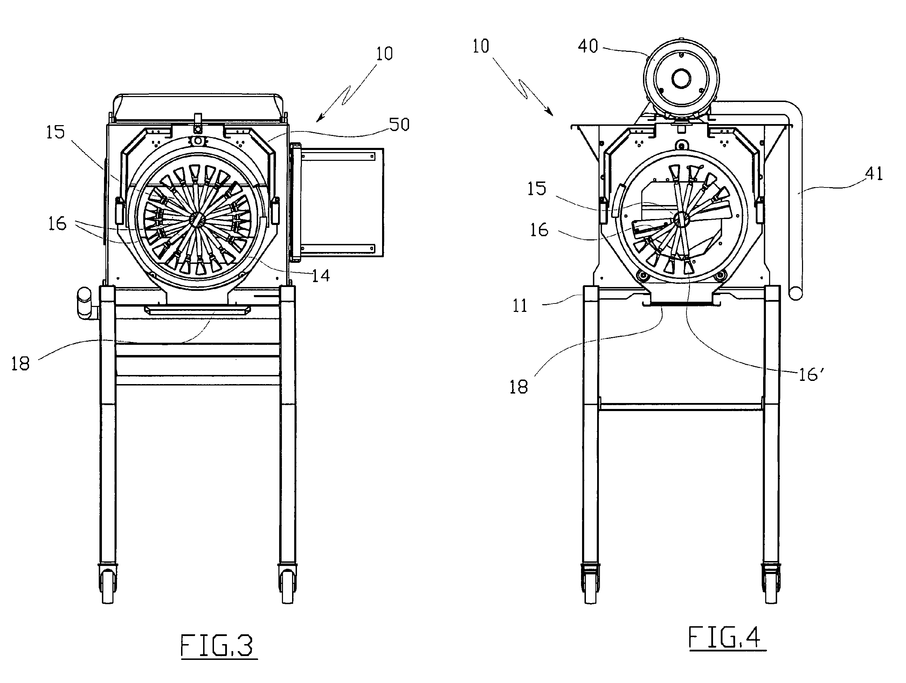

figure 3 is a section view of the destemming machine, according to plane B-B of figure 2;
figure 4 is a section view of the destemming machine of plane B'-B' of figure 2;

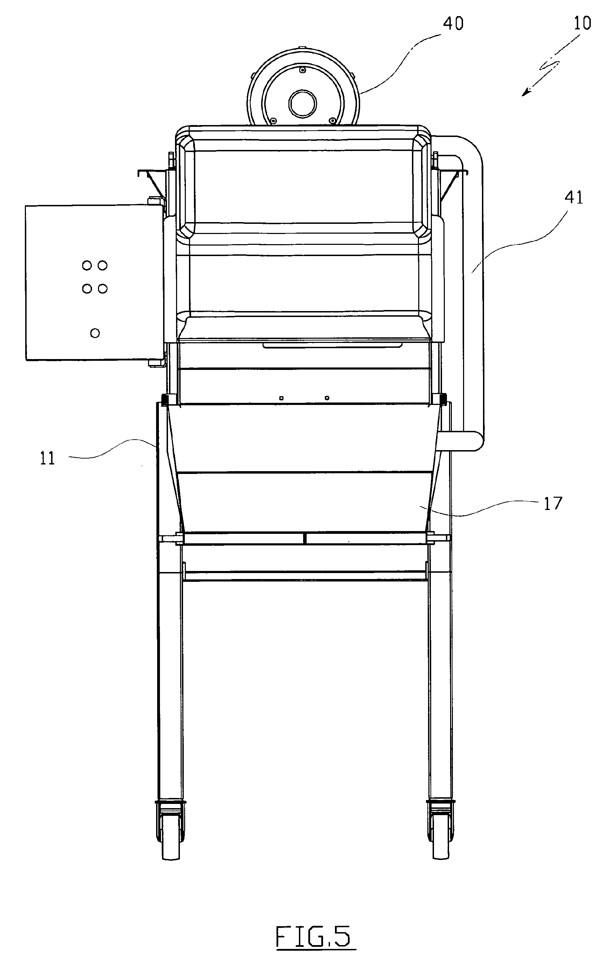

figure 5 is a section view of the destemming machine of plane C-C of figure 2;
figure 6 is a section view of the destemming machine of plane A-A of figure 1;

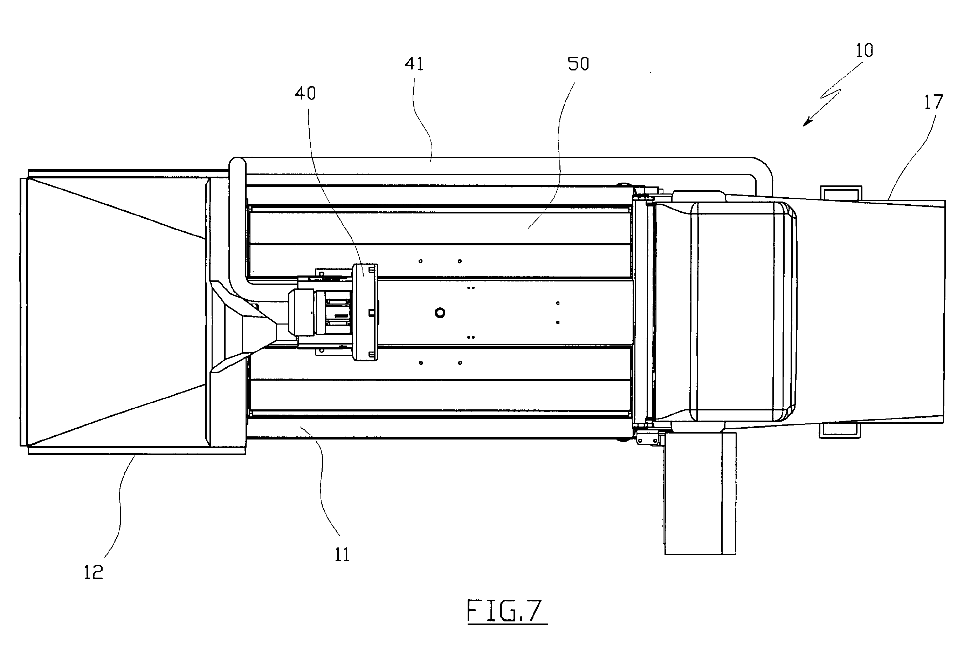

figure 7 is a view from above of the destemming machine;

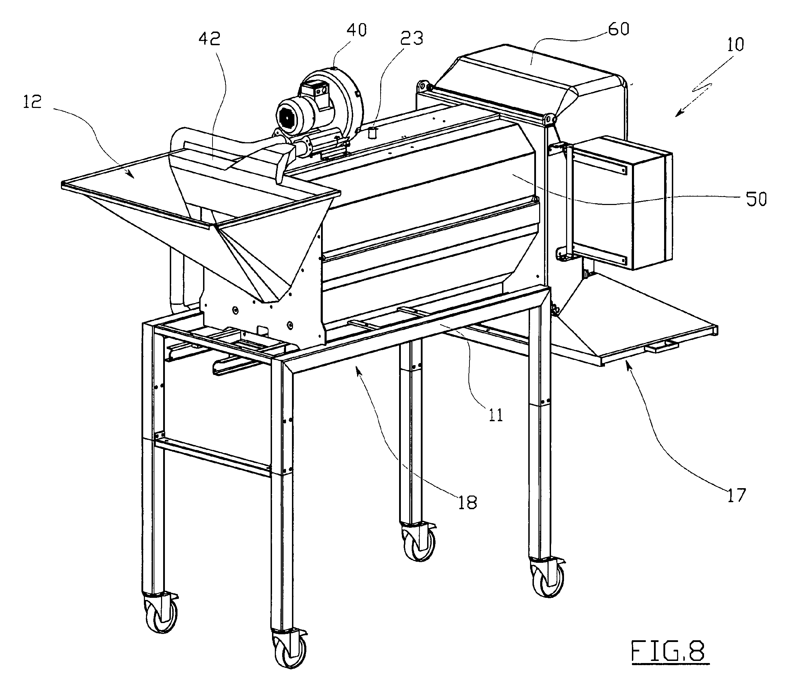

figure 8 is a perspective view of the destemming machine of the invention;

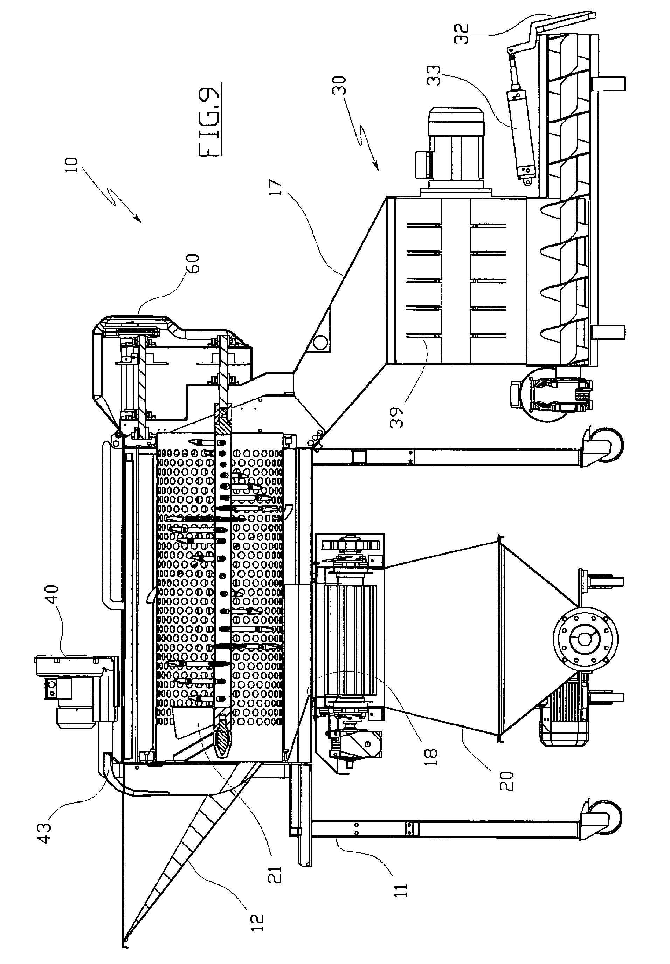

figure 9 is a section view of the destemming machine to which a crusher
group and a grape skin grinder group have been associated; and

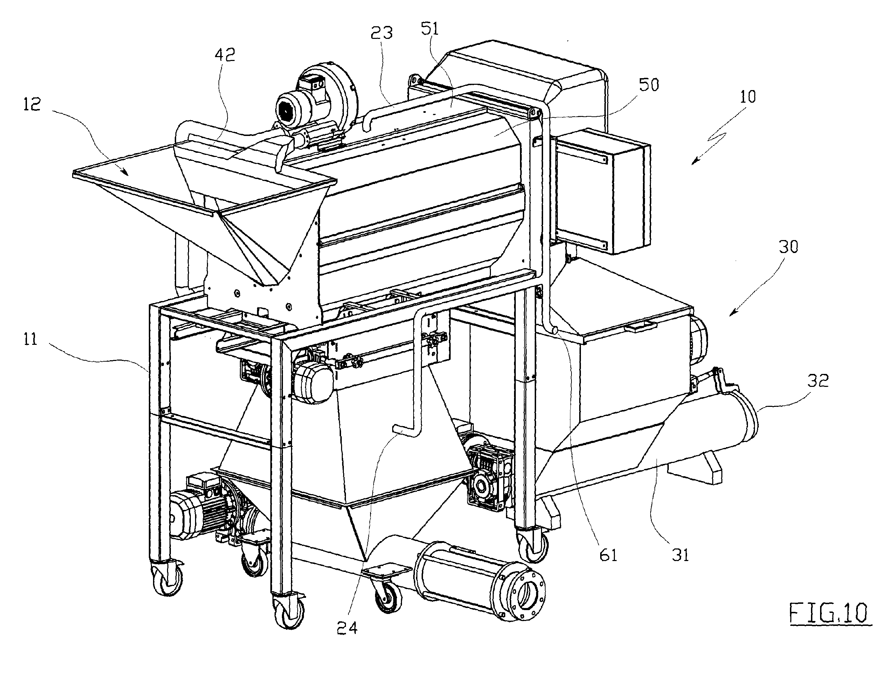

figure 10 is the machine of figure 9 in a perspective view.
Figure 11 is a section view of a variant of the machine of the invention.

### Best Mode for Carrying Out the Invention

The figures of the drawings illustrate a destemming machine, denoted in its entirety by reference number 10, comprising a frame 11 to which a hopper 12 is associated for loading material to be destemmed, in particular bunches of grapes, into an inlet mouth 13 of the machine.

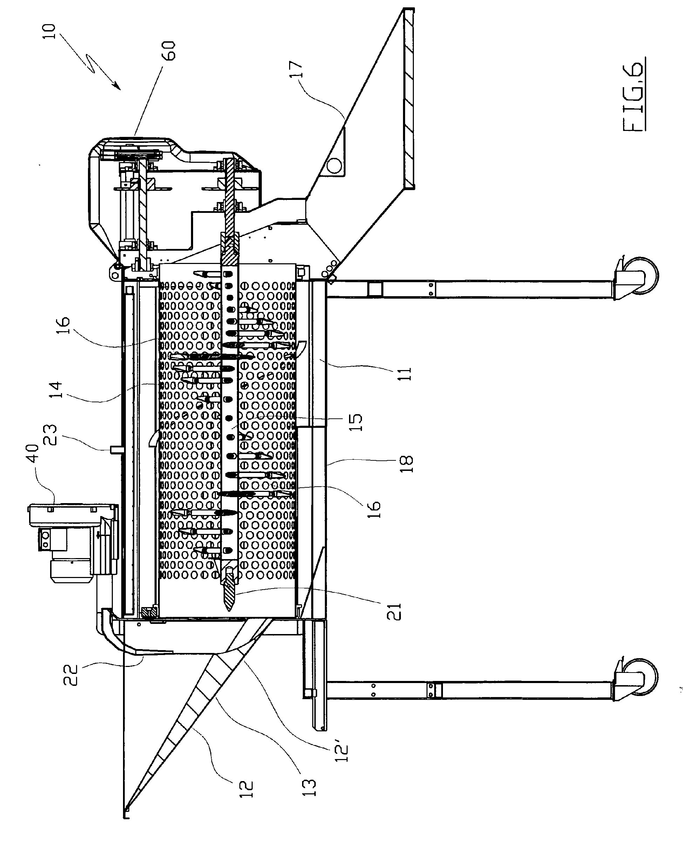

A machine body 50 is supported on the frame 11, which machine body 50 contains a rotary perforated drum 14 internally of which a shaft 15 rotates, the shaft 15 being equipped with a series of blades 16 terminating with ends 16' designed to beat the bunches of grapes in order to detach the grapes from the stems and stalks, the blades 16 being organised in a helical configuration which pushes the working material, and in particular the stalks and stems, towards an outlet mouth for the stalks and stems (towards the right in figure 6).

Upstream of the blade group 16, and at the inlet mouth 13 for the bunches of grapes into the machine, a group of two or more blades 21 is located for conveying the grapes towards the inside of the drum 14 and the other blades 16.

The destemming machine 10 also exhibits, in a lower portion of the frame 11, an outlet mouth 18 for the destemmed grapes.

The rotary motion of the perforated drum 14 and the shaft 15 is driven by a gear reducer group 60.

A crusher group 20 can be associated to the destemming machine 10, possibly located inferiorly of the destemming machine 10 at the outlet mouth 18 of the destemmed grapes.

The positioning of the crusher group 20 as described above is not however essential to the functioning of the machine, but is merely advantageous, as the crushing can take place later on.

Further, a stem milling machine 30 can be associated to the destemming machine 10, located at the outlet mouth 17 of the stems and stalks.

Both the crusher group 20 and the milling machine 30 will be more fully described herein below.

According to the present invention, the destemming machine 10 comprises means for inlet and means for circulation of inertising gas internally thereof, such as to enable the destemming operations to be performed in an inert atmosphere.

In particular, in the destemming machine 10 the means for injecting the inertising gas comprise a system of nozzles for injecting inertising gas internally of the machine body 50 and thus the perforated drum 14, and a system (not illustrated as essentially of known type, such as for example a canister) which enables inertising gas to be sent to the nozzles and which enables circulation of the gas internally of the machine.

In more detail, a nozzle 22 can be included, located at the hopper 12 for inloading of the material to be destemmed. In this case, the nozzle 22 generates a flow of inertising gas in front of the inlet mouth of the machine 10 such as to separate, with reference to the gas flow, the inlet mouth from the area outside the machine. In particular, the outside area of the machine body 50 is separate and distinct from the inside of the machine body 50, at the inlet of the material to be destemmed, thanks to the above-mentioned gas flow.

The inert gas flow is also facilitated by a curved portion 12' of the hopper 12. The inlet section of the inlet mouth of the machine body 50 is preferably the same as the span of the blades of the rotating shaft.

A further nozzle 23 is located at the inspection hatch of the destemming machine, which inspection hatch is located superiorly of the drum 14. Should the crusher group 20 be located inferiorly of the destemming machine 10 it is possible to include a further nozzle 24 located at the supply hopper of the single-screw pump.

The positioning of the above-described nozzles is not however compulsory, but is merely intended as an indication. What is important is that a flow of inert gas be created internally of the machine body during operations and that the gas can be collected and recycled in the machine.

As for the flow of air internally of the destemming machine of the invention, we note that it is preferable to use a flow of gas having a velocity comprised in a range between 0.8 and 1.2 m/sec.

As for the pressure at the inlet of the machine, a pressure of about 200 mBar above atmospheric pressure might be chosen.

As for the pressure at the outlet of the machine, a pressure of about 200 mBar below atmospheric pressure might be chosen.

The pressure difference between inlet and outlet thus generates a flow of inertising gas internally of the machine.

As mentioned, the destemming machine 10 can comprise, downstream of the outlet mouth of the stems and stalks, a stem/stalk milling device to reduce the outlet volume and to enable exit of the inert gas contained among the stems and stalks.

In particular, thanks to the milling device 30, the stems/stalks pass through the miller 39 and into a compactor device 31 comprising an Archimedes screw 31a, in which the screw compacts the stems and stalks by means of a mobile end door 32 having an adjustable closing force, for example by means of a cylinder-piston group 33. Certain embodiments of the machine include adopting at least a nozzle for dispensing inertising gas internally of the compactor 31.

The destemming machine 10 further comprises a removable lid 51 which is part of the machine body 50, which body 50, together with the means for sealing, guarantees sufficient protection against undesired ingress of air into the machine body 50.

The destemming machine exhibits a system for collecting the inert gas, which system is composed of an aspiration conduit 41, an aspirator fan 40 and a gas return conveyor conduit 43 for return of the gas into the hopper 12 at the machine inlet, as well as a connecting conduit 61 to an external gas source connected to the inertising gas supply system and also connected to the crusher group 20 when present and to the casing of the machine body.

The destemming machine further exhibits a control system of the degree of saturation of the gassy atmosphere in contact with the destemmed material: in order to measure the gas saturation degree internally of the machine, for example expressed in real oxygen, nitrogen or carbon dioxide percentage, a sensor 42 is included which, for example, can be positioned on the conduit 61 injecting the gas into the destemming machine, or at another suitable position on the machine body.

In certain embodiments of the invention, an automatic valve (not illustrated) is comprised on the conduit 61, for compensating the inertising gas which valve automatically supplies inertising gas internally of the machine if the degree of saturation of gas detected by the sensor 42 is below a predetermined level. The inertising gas used in the present destemming machine can be any inertising gas used in the sector of wine processing and in particular, though not exclusively, it can be carbon dioxide or nitrogen.

During machine operation, once the gas is introduced, the destemming machine 10, thanks to the circuit for circulating the inertising gas, enables a reduction to a minimum of gas consumption, while keeping the atmosphere advantageously inert inside the machine body in which the grapes are being processed. This happens by means of recycling of the gas and injection of small quantities of pure inert gas, only in a case in which a complete or at least satisfactory inertisation is not maintained.

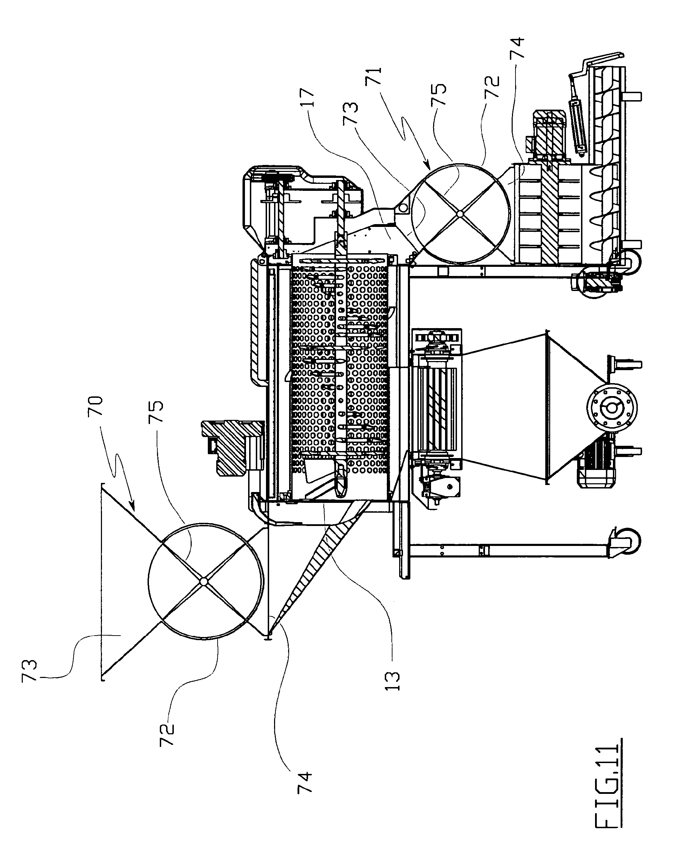

Figure 11 illustrates a variant of the invention which includes associating a respective valve 70 and 71 to the inlet mouth 13 of the machine body and the outlet mouth 17 of the stalks and stems; the valve 70 and 71 has the function of isolating the internal volume of the machine from the surrounding environment such as to minimise both the loss of inertising gas towards the external atmosphere and the ingress of atmospheric air into the machine.

Each valve 70 and 71 comprises a cylindrical body 72 provided with an inlet opening 73 and an outlet opening 74 for the material. An obturator organ 75 is housed internally of the cylindrical body rotating about the axis of the cylindrical body having, in section view, a star conformation. The rotation of the organ 75 is delegated to means for activating, not illustrated, such as for example an electric motor provided with a reducer. Thanks to the valves 70 and 71, the machine internal volume can be isolated from the surrounding environment, limiting to a minimum the leakage of inertising gas towards the outside and the ingress of atmospheric air internally of the machine.

As for the mechanical apparatus of the destemming machine, in particular the elements which perform the actual destemming, i.e. the rotary perforated drum and the shaft 15 with the beater blades 16, the general functioning of the destemming machine is not much different from machines of the prior art. What is observed is that thanks to the described invention the inertisation of the destemmed product is guaranteed, and with low running costs.

The fact that modifications to the mechanical parts are not required to actuate the invention, by which specific reference is made to the bladed shaft and the drum, as well as the means powering them, is an advantage of prime importance of the machine.

The invention offers the following further advantages.

The grapes to be destemmed pass internally of the destemming machine without coming into contact with the oxygen contained in the atmosphere, but remain in an inert atmosphere, which prevents any possibility of oxidation of the product during this stage of processing, in particular in the cases in which the grapes, due to the destemming operations, present lacerations or cuts.

The gas recycling system affords economies in the use of the gas.

Finally, the gas saturation monitoring system intervenes to optimise the use of the gas.

Obviously modifications or improvements dictated by contingencies might be brought to the invention or details thereof without its forsaking the ambit of the invention claimed herein below.

## Claims

1. A destemming machine (10) comprising a frame (11) which houses a machine body (50) to which a hopper (12) is associated to enable inlet of material to be destemmed into an inlet mouth (13) of the machine body (50), at least a rotary perforated drum (14) contained internally of the machine body (50) internally of which a shaft rotates (15), which shaft is provided with blades (16) arranged in a helical fashion in order to perform a destemming action, the machine (10) comprising at least an outlet mouth (18) of the destemmed grapes and an outlet mouth (17) of the stems, **characterised in that** the destemming machine (10) includes means for injecting, recycling and circulating an inertising gas (40) internally thereof, **characterised in that** the means for circulating and recycling the inert gas comprise at least an aspiration conduit (41), an aspirator fan (40) and a conveyor conduit (43) for returning the gas into various nozzles for injecting gas into the machine.

2. The destemming machine (10) of claim 1, **characterised in that** it exhibits a control and monitoring system using sensors (42) of a degree of saturation of a gassy atmosphere in contact with destemmed material.

3. The destemming machine (10) of claim 1, **characterised in that** the means for injecting inertising gas comprise at least a nozzle (22) located at the hopper (12) introducing the material to be destemmed.

4. The destemming machine (10) of claim 4, **characterised in that** the hopper (12) exhibits a curved portion (12') located such as to facilitate flow of the inertising gas entering the machine body (50).

5. The destemming machine (10) of claim 1, **characterised in that** the machine body comprises a removable lid (51) which ensures a sufficient protection against undesired ingress of air into a region comprising the inert atmosphere.

6. The destemming machine (10) of claim 1, **characterised in that** the means for internally injecting and circulating the inertising gas (40) generate an inertising gas flow internally of the destemming machine which gas flows at a velocity comprised in a range of between 0.8 and 1.2 m/sec.

7. The destemming machine (10) of claim 1, **characterised in that** the means for internally injecting and circulating inertising gas (40) generate a pressure at the inlet of the machine of about 200 mBar above atmospheric pressure.

8. The destemming machine (10) of claim 1, **characterised in that** the means for internally injecting and circulating inertising gas (40) generate a pressure at the outlet of the machine of about 200 mBar below atmospheric pressure.

9. The destemming machine (10) of claim 1, **characterised in that** downstream of the outlet mouth for the stems and stalks it comprises a milling device (30) of the stems and stalks, for reducing a volume in outlet thereof and for enabling exit of the inertising gas contained among the stems and stalks.

10. The destemming machine (10) of claim 9, **characterised in that** after milling the stems and stalks pass into a compactor device comprising an Archimedes screw device in which the screw compacts the stems and stalks thanks to a mobile end door (32) having an adjustable force of closure.

11. The machine of claim 10, **characterised in that** at least a nozzle for dispensing the inertising gas is associated to the compactor device.

12. The destemming machine (10) of claim 1, **characterised in that** a crusher group (20) is associated thereto, which crusher group (20) is located inferiorly of the destemming machine (10), at the outlet mouth (18) of the destemmed grapes.

13. The destemming machine (10) of claim 1, **characterised in that** an inlet section of the inlet mouth (13) into the machine body (50) is substantially identical to a span of the blades (16) of the rotating shaft (15).

14. The machine of claim 1, **characterised in that** it comprises a valve (70, 71).

15. The machine of claim 14, wherein the valve (70) is associated to the inlet mouth (13).

16. The machine of claim 14, wherein the valve (71) is associated to the discharge mouth (17) of the stems and stalks.

17. The machine of claim 14, **characterised in that** the valve comprises a cylindrical body (72) provided with an inlet opening (73) and an outlet opening (72) of the material, an obturator organ (75) being housed internally of the cylindrical body, which obturator organ (75) rotates about the axis of the cylindrical body.

18. The machine of claim 17, **characterised in that** in section view the obturator organ has a star shape.

19. The machine of claim 17, **characterised in that** the obturator organ is set in rotation by special activating means.

## Patentansprüche

1. Abbeermaschine (10), die einen Rahmen (11) umfasst, der einen Maschinenkörper (50) beherbergt, mit dem ein Trichter (12) verbunden ist, um den Eintritt des abzubeerenden Materials in eine Einlassöffnung (13) des Maschinenkörpers zu ermöglichen, wobei mindestens eine gelochte Drehtrommel (14) im Maschinenkörper (50) enthalten ist, in der sich eine Welle (15) dreht, wobei die Welle mit Blättern (16) versehen ist, die schraubenförmig angeordnet sind, um eine Abbeertätigkeit auszuführen, wobei die Maschine (10) mindestens eine Auslassöffnung (18) für die entrappten Beeren und eine Auslassöffnung (17) für die Stiele umfasst, **dadurch gekennzeichnet, dass** die Abbeermaschine (10) Mittel zum Einspeisen, Umwälzen und Zirkulierenlassen eines inertisierenden Gases (40) innerhalb derselben umfasst, **dadurch gekennzeichnet, dass** die Mittel zum Zirkulierenlassen und Umwälzen des Inertgases mindestens eine Saugleitung (41), einen Sauglüfter (40) und eine Förderleitung (43) für die Rückführung des Gases in verschiedene Düsen zum Einspeisen des Gases in die Maschine umfassen.

2. Abbeermaschine (10) nach Anspruch 1, **dadurch gekennzeichnet, dass** sie ein Steuer- und Überwachungssystem aufweist, das Sensoren (42) für einen Grad der Sättigung einer in Kontakt mit dem abgebeerten Material befindlichen gasförmigen Atmosphäre verwendet.

3. Abbeermaschine (10) nach Anspruch 1, **dadurch gekennzeichnet, dass** die Mittel zum Einspeisen von inertisierendem Gas mindestens eine Düse (22) umfassen, die sich beim Trichter (12) befindet, der das abzubeerende Material einbringt.

4. Abbeermaschine (10) nach Anspruch 4, **dadurch gekennzeichnet, dass** der Trichter (12) einen gebogenen Teil (12') aufweist, der so angeordnet ist, dass er die Strömung des in den Maschinenkörper (50) eintretenden intertisierenden Gases begünstigt.

5. Abbeermaschine (10) nach Anspruch 1, **dadurch gekennzeichnet, dass** der Maschinenkörper eine abnehmbare Kappe (51) umfasst, die einen ausreichenden Schutz gegen das unerwünschte Eindringen von Luft in einen die inerte Atmosphäre umfassenden Bereich gewährleistet.

6. Abbeermaschine (10) nach Anspruch 1, **dadurch gekennzeichnet, dass** die Mittel zum Einspeisen nach innen und Zirkulierenlassen des inertisierenden Gases (40) eine Strömung inertisierenden Gases innerhalb der Abbeermaschine erzeugen, wobei das Gas mit einer Geschwindigkeit in einem Bereich von 0,8 bis 1,2 m/s strömt.

7. Abbeermaschine (10) nach Anspruch 1, **dadurch gekennzeichnet, dass** die Mittel zum Einspeisen nach innen und Zirkulierenlassen des inertisierenden Gases (40) einen ungefähr 200 mbar über dem Atmosphärendruck liegenden Druck am Einlass der Maschine erzeugen.

8. Abbeermaschine (10) nach Anspruch 1, **dadurch gekennzeichnet, dass** die Mittel zum Einspeisen nach innen und Zirkulierenlassen des inertisierenden Gases (40) einen ungefähr 200 mbar unter dem Atmosphärendruck liegenden Druck am Auslass der Maschine erzeugen.

9. Abbeermaschine (10) nach Anspruch 1, **dadurch gekennzeichnet, dass** sie stromabwärts von der Auslassöffnung für die Stiele und Kämme eine Vorrichtung (30) zum Mahlen der Stiele und Kämme umfasst, um ein Volumen am Auslass derselben zu verringern und den Austritt des zwischen den Stielen und Kämmen enthaltenen inertisierenden Gases zu ermöglichen.

10. Abbeermaschine (10) nach Anspruch 9, **dadurch gekennzeichnet, dass** die Stiele und Kämme nach dem Mahlen in eine eine archimedische Schnecke umfassende Pressvorrichtung übergehen, in der die Schnecke die Stiele und Kämme dank einer beweglichen Abschlussklappe (32) zusammenpresst, die eine einstellbare Schließkraft aufweist.

11. Maschine nach Anspruch 10, **dadurch gekennzeichnet, dass** der Pressvorrichtung mindestens eine Düse zum Verteilen des inertisierenden Gases zugeordnet ist.

12. Abbeermaschine (10) nach Anspruch 1, **dadurch gekennzeichnet, dass** mit derselben ein Maischapparat (20) verbunden ist, wobei der Maischapparat (20) unter der Abbeermaschine (10) bei der Auslassöffnung (18) für die entrappten Beeren angeordnet ist.

13. Abbeermaschine (10) nach Anspruch 1, **dadurch gekennzeichnet, dass** ein Einlassbereich der Öffnung (13) für den Einlass in den Maschinenkörper (50) im Wesentlichen identisch mit einer Spannweite der Blätter (16) der Drehwelle (15) ist.

14. Maschine nach Anspruch 1, **dadurch gekennzeichnet, dass** sie ein Ventil (70, 71) umfasst.

15. Maschine nach Anspruch 14, bei der das Ventil (70) mit der Einlassöffnung (13) verbunden ist.

16. Maschine nach Anspruch 14, bei der das Ventil (71) mit der Auslassöffnung (17) für die Stiele und Kämme verbunden ist.

17. Maschine nach Anspruch 14, **dadurch gekennzeichnet, dass** das Ventil einen zylindrischen Körper (72) umfasst, der mit einer Einlassöffnung (73) und einer Auslassöffnung (72) für das Material versehen ist, wobei im Innern des zylindrischen Körpers ein Abschlusskörper (75) untergebracht ist, wobei sich der Abschlusskörper (75) um die Achse des zylindrischen Körpers dreht.

18. Maschine nach Anspruch 17, **dadurch gekennzeichnet, dass** der Abschlusskörper in der Schnittansicht die Form eines Sterns hat.

19. Maschine nach Anspruch 17, **dadurch gekennzeichnet, dass** der Abschlusskörper durch besondere Betätigungsmittel in Drehung versetzt wird.

## Revendications

1. Machine à égrapper (10) comprenant un châssis (11) qui loge un corps de machine (50) auquel une trémie (12) est associée pour permettre l'entrée de matière à égrapper dans une bouche d'entrée (13) du corps de machine (50), au moins un tambour rotatif perforé (14) contenu à l'intérieur du corps de machine (50) à l'intérieur duquel un arbre tourne (15), lequel arbre est muni de pales (16) disposées de façon hélicoïdale afin d'effectuer une action d'égrappage, la machine (10) comprenant au moins une bouche de sortie (18) des raisins égrappés et une bouche de sortie (17) des tiges, **caractérisée en ce que** la machine à égrapper (10) inclut des moyens pour injecter, recycler et faire circuler un gaz d'inertage (40) à l'intérieur de celle-ci, **caractérisée en ce que** les moyens pour faire circuler et recycler le gaz inerte comprennent au moins un conduit d'aspiration (41), un ventilateur d'aspiration (40) et un conduit de transport (43) afin de renvoyer le gaz dans diverses buses pour l'injection de gaz dans la machine.

2. Machine à égrapper (10) de la revendication 1, **caractérisée en ce qu'**elle présente un système de contrôle et de surveillance utilisant des capteurs (42) d'un degré de saturation d'une atmosphère gazeuse en contact avec la matière égrappée.

3. Machine à égrapper (10) de la revendication 1, **caractérisée en ce que** les moyens pour injecter du gaz d'inertage comprennent au moins une buse (22) située en correspondance de la trémie (12) introduisant la matière à égrapper.

4. Machine à égrapper (10) de la revendication 4, **caractérisée en ce que** la trémie (12) présente une partie incurvée (12') située de telle manière à faciliter l'écoulement du gaz d'inertage entrant dans le corps de machine (50).

5. Machine à égrapper (10) de la revendication 1, **caractérisée en ce que** le corps de machine comprend un couvercle amovible (51) qui assure une protection suffisante contre la pénétration indésirable d'air dans une région comprenant l'atmosphère inerte.

6. Machine à égrapper (10) de la revendication 1, **caractérisée en ce que** les moyens pour injecter et faire circuler à l'intérieur le gaz d'inertage (40) génèrent un écoulement de gaz d'inertage à l'intérieur de la machine à égrapper, lequel gaz s'écoule à une vitesse comprise dans la plage 0,8-1,2 m/sec.

7. Machine à égrapper (10) de la revendication 1, **caractérisée en ce que** les moyens pour injecter et faire circuler à l'intérieur du gaz d'inertage (40) génèrent une pression à l'entrée de la machine d'environ 200 mbar au-dessus de la pression atmosphérique.

8. Machine à égrapper (10) de la revendication 1, **caractérisée en ce que** les moyens pour injecter et faire circuler à l'intérieur du gaz d'inertage (40) génèrent une pression à la sortie de la machine d'environ 200 mbar en dessous de la pression atmosphérique.

9. Machine à égrapper (10) de la revendication 1, **caractérisée en ce que**, en aval de la bouche de sortie pour les tiges et les pédoncules, elle comprend un dispositif de broyage (30) des tiges et des pédoncules, pour réduire un volume en sortie de ceux-ci et pour permettre la sortie du gaz d'inertage contenu parmi les tiges et les pédoncules.

10. Machine à égrapper (10) de la revendication 9, **caractérisée en ce qu'**après le broyage, les tiges et les pédoncules passent dans un dispositif compacteur comprenant un dispositif à vis d'Archimède dans lequel la vis compacte les tiges et les pédoncules grâce à une porte d'extrémité mobile (32) ayant une force de fermeture réglable.

11. Machine de la revendication 10, **caractérisée en ce qu'**au moins une buse pour distribuer le gaz d'inertage est associée au dispositif compacteur.

12. Machine à égrapper (10) de la revendication 1, **caractérisée en ce qu'**un groupe broyeur (20) est associé à celle-ci, lequel groupe broyeur (20) est situé au bas de la machine à égrapper (10), en correspondance de la bouche de sortie (18) des raisins égrappés.

13. Machine à égrapper (10) de la revendication 1, **caractérisée en ce qu'**une section d'entrée de la bouche d'entrée (13) dans le corps de machine (50) est sensiblement identique à l'envergure des pales (16) de l'arbre rotatif (15).

14. Machine de la revendication 1, **caractérisée en ce qu'**elle comporte une vanne (70, 71).

15. Machine de la revendication 14, où la vanne (70) est associée à la bouche d'entrée (13).

16. Machine de la revendication 14, où la vanne (71) est associée à la bouche d'évacuation (17) des tiges et pédoncules.

17. Machine de la revendication 14, **caractérisée en ce que** la vanne comprend un corps cylindrique (72) pourvu d'une ouverture d'entrée (73) et d'une ouverture de sortie (72) de la matière, un organe obturateur (75) étant logé à l'intérieur du corps cylindrique, lequel organe obturateur (75) tourne autour de l'axe du corps cylindrique.

18. Machine selon la revendication 17, **caractérisée en ce que** en vue en coupe l'organe obturateur a une forme d'étoile.

19. Machine selon la revendication 17, **caractérisée en ce que** l'organe obturateur est mis en rotation par des moyens d'activation spéciaux.
